# FASCICULE DE BREVET EUROPEEN

(11) **EP 1 199 869 B1**
(45) Date de publication et mention de la délivrance du brevet: **05.07.2006**
(21) Numéro de dépôt: 01402576.1
(22) Date de dépôt: 05.10.2001
(51) Int. Cl.: H04M 3/36

(54) **Poste téléphonique comportant des moyens de mémorisation ou d'indication de données relatives à des appels entrants et/ou sortants**
Fernsprechapparat mit Mitteln zur Speicherung oder Anzeige von Daten über ankommende und/oder ausgehende Anrufe
Telephone set with means for storing or indicating data concerning incoming and/or outgoing calls

(30) Priorité: 19.10.2000 FR 0013364
(43) Date de publication de la demande: 24.04.2002
(73) Titulaire: Atlinks, 67400 Illkirch (FR)
(72) Inventeur: Wanner, Jean-Marc, 67550 Vendenheim (FR)
(74) Mandataire: Grynwald, Albert

(56) Documents cités:
- US-A- 4 924 496
- US-A- 5 388 150
- US-A- 5 734 706
- HOFFERT B W: "TELEPHONE CALL LOG DEVICE AND ACCESS CONTROLLER" WESCON TECHNICAL PAPERS, 1 novembre 1989 (1989-11-01), XP000116054

## Description

L'invention est relative à un poste téléphonique comportant des moyens de mémorisation ou d'indication de données relatives à des appels entrants et/ou sortants.

Les postes téléphoniques comportent souvent une mémoire pour stocker des informations relatives aux appels entrants et/ou sortants.

Pour les appels entrants il est courant de mémoriser le numéro appelant (s'il est communiqué sur la ligne) ainsi que la date et l'heure de l'appel et, dans le cas où il a été répondu à l'appel, la durée de la conversation, ou de façon plus générale, de la connexion. Un poste téléphonique peut aussi comporter un indicateur, tel qu'une inscription sur un écran ou une lampe clignotante, informant qu'il y a eu un appel et qu'il n'a pas été répondu. Dans ce cas l'indicateur disparaît quand l'utilisateur effectue une démarche montrant qu'il a pris connaissance de l'appel.

Il est également courant de mémoriser les appels sortants avec leurs dates et leurs durées. Cette disposition permet notamment de vérifier, le cas échéant, l'exactitude des sommes facturées pour les communications téléphoniques.

De tels postes téléphoniques sont, pour une même ligne, c'est-à-dire, en général, pour un même numéro, souvent associés à d'autres postes qui comportent ou non les mêmes moyens de mémorisation ou d'indication. Par exemple, le poste téléphonique présentant des moyens de mémorisation des appels entrants et/ou sortants se trouve dans la pièce principale d'une habitation tandis que des postes secondaires, du type sans fil ou non, se trouvent dans d'autres pièces.

L'invention résulte de la constatation que, lorsqu'un poste à moyen de mémorisation ou d'indication d'appels entrants et/ou sortants est associé, sur une même ligne, à d'autres postes, les informations mémorisées ou indiquées ne peuvent pas être fiables. Les informations relatives aux appels entrants sont exactes seulement quand la réponse est effectuée sur le poste principal (celui comportant les moyens de mémorisation ou d'indication). De même, pour les appels sortants les informations mémorisées sont exactes seulement quand ces appels sont entièrement effectués à partir du poste principal et ne se terminent pas sur un autre poste.

Pour un appel entrant, si une réponse est effectuée sur un poste secondaire, le poste principal comportera l'indication qu'il n'a pas été répondu à l'appel. Si la communication est prise sur le poste principal et se continue sur un poste secondaire la durée affichée sera celle de la communication sur le poste principal et non sa durée totale.

Quand le poste téléphonique principal comprend des moyens de mémorisation des numéros appelés et de la durée des communications, et lorsqu'un appel est initié sur le poste principal et se poursuit sur un poste secondaire, la durée enregistrée est celle de la communication effectuée à partir du poste principal et ne tient pas compte de la durée de la communication qui s'est poursuivie sur le poste secondaire. En outre, si un appel sortant est initié à partir d'un poste secondaire les données relatives à cet appel ne sont pas enregistrées.

Pour résoudre ces problèmes de fiabilité de mémorisation ou d'indication de données relatives à des appels entrants et/ou sortants quand un poste téléphonique est branché sur une ligne pouvant comporter d'autres postes, dits secondaires, l'invention prévoit un poste téléphonique qui comprend :
des moyens d'enregistrement de données relatives à des appels entrants et/ou sortants et,
un détecteur d'état de ligne,
les moyens d'enregistrement de données relatives aux appels entrants et/ou sortants comportant un moyen pour que ces données tiennent compte du signal fourni par le détecteur d'état de la ligne et donc des communications effectuées par l'intermédiaire du (des) poste(s) secondaire(s) branché(s) sur la même ligne.

Ainsi dans le cas d'un appel entrant, si le poste principal comporte un indicateur de non-réponse, ce dernier peut-être désactivé quand la réponse est effectuée sur un poste secondaire. Quand le poste comporte un moyen d'enregistrement de la durée des communications entrantes et/ou sortantes, cette durée enregistrée est fiable puisqu'elle tient compte des postes secondaires grâce au signal fourni par le détecteur d'état de ligne.

L'état de la technique à prendre en considération est US-A- 5734706, et Hoffert BW : « Telephone call log device and access controller », Wescon technical papers, 1^{er} novembre 1989.

Si le poste récepteur principal comporte une mémorisation de la durée des appels reçus, et si la réponse est effectuée sur un poste secondaire la durée enregistrée sera celle de la communication réelle, indépendamment du poste, ou des postes, à partir duquel (ou desquels) il aura été répondu à l'appel. Si le poste comporte un indicateur de non-réponse à un appel, on prévoit des moyens pour désactiver cet indicateur lorsque le détecteur d'état de ligne indique une occupation de ligne, c'est-à-dire une réponse à un appel.

Dans le cas où le poste téléphonique comporte des moyens pour mémoriser la durée des appels sortants avec éventuellement les numéros correspondants, quand un appel est initié à partir de ce poste et se termine sur un poste secondaire, la durée de l'appel qui est enregistrée correspond à la durée totale car la fin de l'appel est déterminée par le détecteur d'état de ligne qui fournit un signal d'arrêt de comptage de la durée d'une communication appelante quand le détecteur d'état de ligne fournit un signal indiquant le passage de la ligne de l'état occupé à l'état libre.

Pour qu'un poste téléphonique comprenant une mémorisation des numéros appelants et/ou de la durée des communications appelantes, puisse fournir une information sur les numéros appelés même quand les communications sont initiées à partir d'un poste secondaire, dans un mode réalisation, le poste télé-phonique comprend un détecteur de numéros appelés tel qu'un décodeur DTMF.

Un détecteur de numéros appelés peut être réalisé à l'aide de filtres et d'une programmation correspondante d'un processeur.

Le détecteur d'état de ligne est, par exemple, un détecteur comportant des moyens de mesure de la tension de la ligne ou un détecteur de mesure de l'activité de la ligne, c'est-à-dire un moyen de mesure du signal alternatif sur la ligne.

L'invention permet de fiabiliser les données relatives aux appels entrants et/ou sortants sans compliquer la réalisation d'un poste téléphonique. En particulier les détecteurs d'état de ligne sont souvent prévus dans les postes téléphoniques pour d'autres usages. En outre la gestion des numéros appelants et/ou appelés est habituellement effectuée à l'aide d'un microprocesseur ou microcontrôleur. Dans ce cas, l'invention nécessite seulement de modifier la programmation du processeur afin qu'il tienne compte du détecteur d'état de ligne pour, notamment, que les durées de communication correspondent aux durées réelles, c'est-à-dire à des durées indépendantes du poste à partir duquel la communication est effectuée sur la ligne concernée.

Dans ce mode de réalisation, le logiciel à ajouter pour réaliser l'invention peut être téléchargé à l'aide de la ligne téléphonique.

L'invention concerne ainsi, de façon générale, un poste téléphonique comprenant des moyens de mémorisation ou d'indication de données relatives à des appels entrants et/ou sortants ; ce poste étant branché sur une ligne pouvant comporter d'autres postes, dits secondaires, il comporte un détecteur fournissant un signal d'état de ligne aux moyens de mémorisation ou d'indication afin que les données mémorisées ou indiquées soient fonctions de l'état de ligne, et donc des communications effectuées par l'intermédiaire du (des) poste(s) secondaire(s) branché(s) sur la même ligne.

Selon une réalisation, les moyens de mémorisation ou d'indication comportent un indicateur de non-réponse à un appel entrant qui reste activé quand il n'a pas été répondu à un appel entrant, la réponse étant effectuée sur ledit poste ou sur un poste secondaire raccordé, cette non-réponse étant déterminée à partir du signal d'état de la ligne fourni par le détecteur, l'indicateur de non réponse étant désactivé quand la réponse est effectuée sur un poste secondaire.

Dans une réalisation, le poste comporte des moyens de mémorisation des durées de communications pour des appels entrants comprenant des moyens déterminant la durée qui s'écoule, pour de tels appels, entre deux changements d'état de ligne, cette durée tenant ainsi compte de la communication réelle, indépendamment du poste, ou des postes, à partir duquel (ou desquels) il aura été répondu à l'appel. Dans ce cas, les moyens de mémorisation ou d'indication peuvent comporter des moyens de mémorisation des numéros reçus.

Selon un mode de réalisation, les moyens de mémorisation ou d'indication comportent des moyens de mémorisation des durées des appels sortants déterminant la durée qui s'écoule, pour de tels appels, entre deux changements d'état de ligne, la durée des appels sortants étant ainsi la durée totale de l'appel quand ce dernier est initié à partir dudit poste et se termine sur un poste secondaire, le détecteur d'état de ligne fournissant un signal d'arrêt de comptage de la durée d'une communication appelante quand le détecteur d'état de ligne fournit un signal indiquant le passage de la ligne de l'état occupé à l'état libre.

Dans une réalisation, le poste comprend un processeur et des moyens pour recevoir, par la ligne téléphonique, des signaux de programmation chargés dans la mémoire du processeur afin que celui-ci devienne capable de rendre les données mémorisées ou indiquées fonctions de l'état de la ligne.

L'invention concerne aussi un ensemble d'au moins deux postes téléphoniques comprenant un poste tel que défini ci-dessus et un poste dépourvu de moyens de mémorisation ou d'indication.

D'autres caractéristiques et avantages de l'invention apparaîtront avec la description de certains de ses modes de réalisation, celle-ci étant effectuée en se référant aux dessins ci-annexés sur lesquels :
la figure 1 représente une installation téléphonique comportant un poste principal et des postes secondaires,
la figure 2 est un schéma montrant un poste téléphonique selon un premier mode de réalisation de l'invention, et
la figure 3 est un schéma analogue à celui de la figure 2 pour un autre mode réalisation.

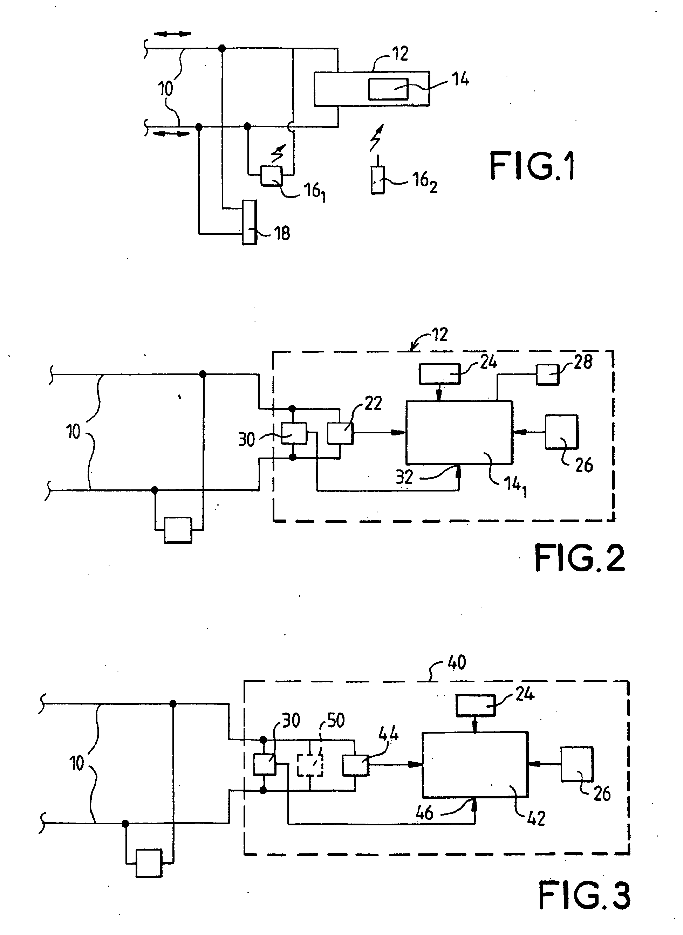

Sur la figure 1 on a représenté de façon schématique une installation téléphonique comportant une ligne 10 sur laquelle est branché un poste téléphonique 12 comprenant des moyens de mémorisation 14 de données relatives aux appels entrants et/ou sortants. Dans ce qui suit ce poste 12 à moyen 14 de mémorisation sera dénommé poste principal. Sur cette même ligne 10 sont branchés en parallèle des postes secondaires 16 et 18. Le poste 12 et/ou les postes secondaires 16 et 18 peuvent être du type sans fil. Par exemple le poste 16 est du type sans fil, c'est à dire qu'une base 16₁ est reliée par fil à la ligne 10 tandis que le poste 16₂ proprement dit communique sans fil avec la base 16₁.

Les moyens de mémorisation 14 sont capables de réaliser au moins l'une des trois fonctions suivantes :
La première fonction est la mémorisation des appels entrants auxquels il n'a pas été répondu. Dans ce cas un indicateur, tel qu'un signal lumineux clignotant, reste activé et doit ensuite être désactivé manuellement.
La seconde fonction est l'indication de la durée des communications pour les appels entrants, et/ou les numéros (quand ils sont reçus) de ces appelants.
La troisième fonction est la durée de communications pour les appels sortants, et/ou l'enregistrement des numéros correspondants.

Pour chacune de ces trois fonctions, le moyen de mémorisation ne fournit pas de données fiables si la communication est effectuée totalement ou en partie à l'aide d'un poste secondaire. Ainsi pour la première fonction, si le premier poste 12 n'est pas décroché mais si c'est seulement l'un des postes secondaires qui est décroché pour répondre à un appel entrant, l'indicateur de non-réponse à un appel entrant reste activé.

Quand on prévoit un enregistrement de la durée des appels entrants, cette durée correspond seulement à la durée de l'intervention du poste 12. Par exemple si l'utilisateur répond à l'appel entrant à l'aide du poste 12 et, ensuite, à l'aide d'un poste 16 ou 18 en ayant raccroché le poste principal la durée enregistrée ne sera pas celle de la communication mais celle qui s'écoule entre la prise de ligne et la fin de l'intervention du poste principal.

Si un appel sortant est initié à partir du poste principal et se termine sur un poste secondaire, le poste principal étant, entre-temps, raccroché, la durée de l'appel sortant qui sera enregistrée est celle qui correspond au temps pendant lequel le poste principal prend la ligne 10. Ainsi la donnée fournie par le moyen de mémorisation 14 ne sera pas correcte. Enfin, si un appel sortant est effectué uniquement à partir d'un poste secondaire aucune donnée ne sera enregistrée dans le poste principal.

L'invention permet d'enregistrer des données fiables sur le poste principal, même si un poste secondaire intervient dans la communication entrante et/ou sortante.

Dans le mode de réalisation de l'invention qui est représenté sur la figure 2, le poste 12 comporte un module 14₁ de mémorisation et d'affichage de données relatives aux appels entrants. Le poste 12 comporte donc un détecteur 22 des numéros appelants dont la sortie est reliée à une entrée du module 14₁. Le poste 12 comprend aussi un horodateur 24 qui fournit des données de dates et de durées au module 14₁. Le poste comporte également une mémoire 26 formant un répertoire téléphonique contenant les numéros de téléphones et, éventuellement, d'autres indications relatives aux numéros.

Le poste comprend aussi un voyant 28 de notification d'appels non répondus qui est activé par un signal de sortie du module 14₁. A la place d'un voyant on peut prévoir un autre type d'indication, notamment sur un afficheur.

Selon l'invention le poste 12 comporte un détecteur 30 d'état de ligne qui fournit un signal représentatif de l'état d'occupation de la ligne. Ce signal fourni par le détecteur 30 est une indication d'état de ligne et non une indication de prise de ligne ou non par le poste 12. Autrement dit, le détecteur 30 fournit un signal d'occupation de ligne quand l'un quelconque des postes téléphoniques raccordés à la ligne est décroché. Il fournit un signal de ligne libre quand tous les postes téléphoniques raccordés sont raccrochés.

Le détecteur 30 d'état de la ligne est, de façon en soi connue, soit du type à détection du niveau de tension continue de la ligne 10, soit du type à détection d'activité (niveau de signal alternatif) de cette ligne 10.

Le signal fourni par le détecteur 30 est appliqué sur une entrée 32 du module 14₁ afin d'empêcher l'activation de la lampe 28 quand la ligne passe de l'état libre à l'état occupé, c'est-à-dire quand le poste 12 ou un poste secondaire est décroché suite à un appel entrant.

Le signal fourni sur l'entrée 32 permet aussi de déterminer la durée réelle de la communication quel que soit le poste utilisé pour répondre. Ainsi la durée affichée sera celle qui s'écoule entre la prise de ligne (début de ligne occupée) et la fin de prise de ligne (tous les postes sont raccrochés).

Dans ces conditions s'il est répondu à un appel entrant par un poste secondaire la durée de la communication sera enregistrée dans le poste principal 12. De même s'il est d'abord répondu à l'aide du poste principal et, ensuite, à l'aide d'un poste secondaire, la durée enregistrée sera toujours celle de la communication réellement effectuée, c'est-à-dire la durée de l'occupation de la ligne.

De façon classique l'horodateur 24 permet de déterminer les durées des communications, ainsi que leurs dates. La mémoire 26 de répertoire est utilisée, de façon en soi connue, pour mémoriser le nom de l'appelant quand le numéro appelant se trouve déjà dans le répertoire 26 et lorsque le nom n'est pas envoyé sur la ligne par le central téléphonique.

Le poste 40 représenté sur la figure 3 comporte des moyens de mémorisation de données relatives aux appels sortants. Il comporte un module 42 destiné à mémoriser ces données et à commander leur affichage. Ce module 42 reçoit des informations d'un horodateur 24 et d'un répertoire 26 analogue à la mémoire de même référence du mode de réalisation décrit avec la figure 2.

Le numéroteur 44 du poste 40 fournit un signal de numéro sur une entrée du module 42. Ce numéro appelé est mémorisé par ce module avec le nom de l'appelé si ce numéro se trouve dans le répertoire 26.

L'horodateur permet de mémoriser les dates et les durées des appels.

Selon l'invention le poste 40 comporte un détecteur 30 d'état de la ligne 10. Ce détecteur est identique à celui qui porte la même référence dans la réalisation représentée sur la figure 2. Le signal fourni par ce détecteur 30 est appliqué sur une entrée 46 du module 42 afin que les durées mémorisées pour afficher des communications sortantes soient indépendantes du poste à partir duquel les communications ont été effectuées ou initiées, et ne dépendent que de l'état de la ligne. Ainsi la durée enregistrée est celle qui s'écoule entre le début de la prise de ligne et la fin de prise de ligne.

Si la communication est initiée à partir du poste principal 40 et se termine à partir d'un poste secondaire le module 42 enregistre le numéro appelé et, en même temps, la durée réelle de la communication et non la durée correspondant à la seule partie de la communication effectuée sur le poste principal 40. Si la communication est initiée à partir d'un poste secondaire la durée totale de la communication pourra être enregistrée.

Pour permettre l'enregistrement, dans le poste principal 40, d'un numéro appelé à partir du poste secondaire, ce poste 40 comporte, dans une variante représentée en traits interrompus sur la figure 3, un détecteur 50 de numéro appelé émis sur la ligne 10 par un autre poste. Ce détecteur 50 est, par exemple, un décodeur DTMF.

Quel que soit son mode réalisation, l'invention permet, avec des moyens simples et économiques, de fiabiliser les données enregistrées se rapportant aux appels entrants et/ou sortants. Quand un détecteur 30 d'état de ligne est prévu dans un poste pour une autre fonction que celle pour laquelle il est prévu dans le cadre de la présente invention et lorsque le poste comporte aussi un processeur, les fonctions de fiabilisation des données peuvent être chargées sous forme de programme(s) dans le processeur. Ce chargement peut être effectué par l'intermédiaire de la ligne téléphonique 10.

Le détecteur 50, notamment un décodeur DTMF, peut également être réalisé à l'aide du processeur.

## Revendications

1. Poste téléphonique (12 ; 40) comprenant des moyens de mémorisation ou d'indication de données relatives à des appels entrants et/ou sortants, **caractérisé en ce que** ce poste étant branché sur une ligne pouvant comporter d'autres postes, dits secondaires, il comporte un détecteur (30) fournissant un signal d'état de ligne aux moyens de mémorisation ou d'indication (14₁ ; 42) afin que les données mémorisées ou indiquées soient fonctions de l'état de la ligne, et donc des communications effectuées par l'intermédiaire du ou des postes secondaires branchés sur la même ligne.

2. Poste selon la revendication 1 **caractérisé en ce que** les moyens de mémorisation ou d'indication comportent un indicateur (28) de non-réponse à un appel entrant, qui reste activé quand il n'a pas été répondu à un appel entrant, la réponse étant effectuée sur ledit poste ou sur un poste secondaire raccordé, cette non-réponse étant déterminée à partir du signal d'état de la ligne fourni par le détecteur (30), l'indicateur de non réponse étant désactivé quand la réponse est effectuée sur un poste secondaire.

3. Poste selon la revendication 1 ou 2 **caractérisé en ce qu'**il comporte des moyens de mémorisation des durées de communications pour des appels entrants comprenant des moyens déterminant la durée qui s'écoule, pour de tels appels, entre deux changements d'état de ligne, cette durée tenant ainsi compte de la communication réelle, indépendamment du poste, ou des postes, à partir duquel ou desquels il aura été répondu à l'appel.

4. Poste selon la revendication 3 **caractérisé en ce que** les moyens de mémorisation ou d'indication comportent des moyens de mémorisation des numéros reçus.

5. Poste selon l'une quelconque des revendications précédentes **caractérisé en ce que** les moyens de mémorisation ou d'indication comportent des moyens de mémorisation des durées des appels sortants déterminant la durée qui s'écoule, pour de tels appels, entre deux changements d'état de ligne, la durée des appels sortants étant ainsi la durée totale de l'appel quand ce dernier est initié à partir dudit poste et se termine sur un poste secondaire, le détecteur d'état de ligne fournissant un signal d'arrêt de comptage de la durée d'une communication appelante quand le détecteur d'état de ligne fournit un signal indiquant le passage de la ligne de l'état occupé à l'état libre.

6. Poste selon la revendication 5 **caractérisé en ce que** les moyens de mémorisation ou d'indication comportent un moyen de mémorisation des numéros appelés.

7. Poste selon la revendication 6 **caractérisé en ce qu'**il comporte un détecteur de numéro composé sur la ligne, tel qu'un décodeur DTMF, afin de mémoriser les numéros initiés à partir d'autres postes raccordés sur la même ligne.

8. Poste selon l'une quelconque des revendications précédentes, **caractérisé en ce qu'**il comprend un processeur et des moyens pour recevoir, par la ligne téléphonique, des signaux de programmation chargés dans la mémoire du processeur afin que celui-ci devienne capable de rendre les données mémorisées ou indiquées fonctions de l'état de la ligne.

9. Ensemble d'au moins deux postes téléphoniques comprenant un poste selon l'une quelconque des revendications précédentes et un poste dépourvu de moyens de mémorisation ou d'indication.

## Claims

1. Telephone terminal (12; 40) comprising means of memorizing or indicating data related to incoming and/or outgoing calls, **characterized in that**, this terminal being connected on a line which can comprise other terminals, named secondary terminals, it comprises a detector (30) outputting a line state signal to the memorization or indication means (14₁; 42) such that the memorized or indicated data depend on the state of the line and thus, on the communications realized through the secondary terminal or terminals connected on the same line.

2. Telephone terminal according to claim 1,
**characterized in that** the memorization or indication means comprise an unanswered incoming call indicator (28) that remains activated when an incoming call was not answered, the answer being realized on said telephone terminal or on a secondary connected telephone terminal, with this failure to answer being determined from the line state signal supplied by the detector (30), the unanswered incoming call indicator being deactivated when the answer is realized on a secondary telephone terminal.

3. Telephone terminal according to claim 1 or 2, **characterized in that** it comprises means of memorising communication times for incoming calls comprising means of determining the time that elapses for these calls between two line state changes, this time thus taking into account of the actual communication, independently from the telephone terminal or terminals, from which it has been answered to the call.

4. Telephone terminal according to claim 3, **characterized in that** the memorization or indication means comprise means of memorizing the received numbers.

5. Telephone according to any one of the previous claims, **characterized in that** the memorization or indication means comprise means of memorizing the durations of outgoing calls determining the resulting duration for these calls between two line state changes, the duration of outgoing calls being therefore the total duration of the call when the later originates from said telephone terminal and ends on a secondary telephone terminal, the line state detector providing a signal for stopping the counting of the duration of an outgoing call when the line state detector provides a signal indicating the passage of the line from the busy state to the idle state.

6. Telephone according to claim 5, **characterized in that** the memorization or indication means comprise a means of memorizing called numbers.

7. Telephone according to claim 6, **characterized in that** it comprises a detector of the number dialled on the line, such as a DTMF decoder, in order to memorize call numbers dialled from other telephones connected on the same line.

8. Telephone terminal according to any one of the previous claims, **characterized in that** it comprises a processor and means of receiving programming signals through the telephone line, to be downloaded into the processor memory such that the processor becomes capable of restoring the memorized data or indicated data depending on the state of the line.

9. Set of at least two telephone terminals including one telephone terminal according to any one of the previous claims and one telephone terminal without memorization or indication means.

## Patentansprüche

1. Telefonapparat (12; 40) mit Mitteln zum Speichern oder zum Anzeigen von auf eingehende und/oder ausgehende Anrufe bezogenen Daten, **dadurch gekennzeichnet, dass** dieser Apparat, der an eine Leitung angeschlossen ist, die auch andere, so genannte Nebenapparate umfassen kann, einen Detektor (30) aufweist, der den Speicher- oder Anzeigemitteln (14₁; 42) ein Leitungszustandssignal liefert, damit die gespeicherten oder angezeigten Daten vom Leitungszustand und damit von den mit dem (den) an dieselbe Leitung angeschlossenen Nebenapparate(n) geführten Gesprächen abhängen.

2. Apparat nach Anspruch 1, **dadurch gekennzeichnet, dass** die Speicher- oder Anzeigemittel einen Anzeiger (28) für die Nichtbeantwortung von eingehenden Anrufen umfassen, der aktiviert bleibt, wenn ein eingehender Anruf nicht beantwortet wurde, wobei die Antwort auf dem erwähnten Apparat oder auf einem angeschlossenen Nebenapparat erfolgt und diese Nichtbeantwortung anhand eines Leitungszustandssignals festgestellt wird, das vom Detektor (30) geliefert wird, wobei der Nichtbeantwortungsanzeiger deaktiviert wird, wenn die Antwort auf einem Nebenapparat erfolgt.

3. Apparat nach Anspruch 1 oder 2, **dadurch gekennzeichnet, dass** er Mittel zum Speichern der Gesprächsdauer bei eingehenden Anrufen umfasst, die Mittel aufweisen, welche die Dauer bestimmen, die bei solchen Anrufen zwischen zwei Veränderungen des Leitungszustandes abläuft, wobei diese Dauer somit das tatsächliche Gespräch, unabhängig vom Apparat oder von den Apparaten, von dem oder von denen aus der Anruf beantwortet wurde, berücksichtigt.

4. Apparat nach Anspruch 3, **dadurch gekennzeichnet, dass** die Speicher- oder Anzeigemittel Mittel zum Speichern der empfangenen Nummern umfassen.

5. Apparat nach einem der vorhergehenden Ansprüche, **dadurch gekennzeichnet, dass** die Speicher- oder Anzeigemittel Mittel zum Speichern der Dauer der ausgehenden Anrufe umfassen, welche die Dauer bestimmen, die bei solchen Anrufen zwischen zwei Leitungszustandsänderungen abläuft, wobei die Dauer der ausgehenden Anrufe somit die Gesamtdauer des Anrufs ist, wenn dieser auf dem erwähnten Apparat begonnen wird und auf einem Nebenapparat endet, wobei der Leitungszustandsdetektor ein Signal zum Anhalten des Zählens der Dauer eines Anrufergesprächs liefert, wenn der Leitungszustandsdetektor ein Signal liefert, das den Übergang der Leitung vom belegten in den freien Zustand anzeigt.

6. Apparat nach Anspruch 5, **dadurch gekennzeichnet, dass** die Speicher- oder Anzeigemittel ein Mittel zum Speichern der angerufenen Nummern aufweisen.

7. Apparat nach Anspruch 6, **dadurch gekennzeichnet, dass** er einen Detektor für auf der Leitung gewählte Nummern, wie einen DTMF-Decoder, umfasst, um die von anderen, an dieselbe Leitung angeschlossenen Apparaten ausgehenden Nummern zu speichern.

8. Apparat nach einem der vorhergehenden Ansprüche, **dadurch gekennzeichnet, dass** er einen Prozessor und Mittel zum Empfang der in den Speicher des Prozessors geladenen Programmiersignale über die Telefonleitung umfasst, damit dieser die abhängig vom Zustand der Leitung gespeicherten oder angezeigten Daten verarbeiten kann.

9. Anordnung von mindestens zwei Telefonapparaten, die einen Apparat nach einem der vorhergehenden Ansprüche und einen Apparat ohne Speicher- oder Anzeigemittel umfasst.
